# EUROPÄISCHE PATENTSCHRIFT

(11) **EP 0 436 187 B1**
(45) Veröffentlichungstag und Bekanntmachung des Hinweises auf die Patenterteilung: **18.05.1994**
(21) Anmeldenummer: 90124881.5
(22) Anmeldetag: 20.12.1990
(51) Int. Cl.: B65G 65/12, E21D 9/12

(54) **Ladeeinrichtung für das Verladen von Haufwerk**
Loading installation for loading bulk material
Installation de chargement pour le chargement de matières en vrac

(30) Priorität: 05.01.1990 DE 4000200
(43) Veröffentlichungstag der Anmeldung: 10.07.1991
(73) Patentinhaber: NOELL Service und Maschinentechnik GmbH, D-30853 Langenhagen (DE)
(72) Erfinder: Schmid, Leo, W-3380 Goslar 1 (DE); Kühl, Detlef, W-3300 Braunschweig (DE)

(56) Entgegenhaltungen:
- DE-A- 2 441 567
- DE-A- 2 554 274
- DE-A- 3 304 908
- DE-A- 3 546 192
- GB-A- 2 166 403

## Beschreibung

Die Erfindung betrifft eine Ladeeinrichtung für das Verladen von Haufwerk auf das Kopfende eines Förderers, insbesondere von einer vor dem Kopfende des Förderers vorgesehenen Laderampe einer für den Bergbau bestimmten Vortriebsmaschine, bei der oberhalb der Laderampe seitlich des Kopfendes des Förderers im Querschnitt dreieckige Ladebalken vorgesehen sind, die auf ihrer dem Förderer zugewendeten Seite eine steile und auf ihrer anderen Seite eine flach ansteigende Seitenfläche aufweisen und eine Hin- und Herbewegung in Richtung zum Förderer und von ihm weg ausführen, wobei jedem Ladebalken auf der von dem Förderer abgewendeten Seite am Ende seiner Rückbewegungsbahn ein im Querschnitt ähnlicher Stützbalken bzw. eine Stützwand zugeordnet ist.

Bei einer bekannten Ladeeinrichtung dieser Art (DE-A-35 46 192) bewegen sich die seitlich neben dem Kopfende des Förderers angeordneten Ladebalken mit einer Schwenkbewegung um ihr von der vorderen Kante der Laderampe abgewendetes Ende auf den Kopf des Förderers zu und von ihm weg, und zwar über die Oberfläche der Laderampe hinweg, während die nicht bewegten Stützbalken auf der Oberfläche der Laderampe befestigt sind.

Insbesondere bei Ladeeinrichtungen wie der genannten, die seitlich des Fördererkopfes mehr als einen Ladebalken aufweisen, wird der Bewegungsantrieb der Ladebalken kompliziert. Bei diesen wie auch bei Ladeeinrichtungen mit seitlich nur einem schwenkbar angeordneten Ladebalken ergeben sich außerdem Schwierigkeiten, weil die Ladebalken nur an einem Ende auf einem Zapfen schwenkbar gelagert sind und relativ dicht über der Rampenoberfläche geführt werden müssen, so daß Verklemmungen von Ladegut auftreten können, die das Schwenkgelenk stark beanspruchen und zu hohem Verschleiß führen.

Aufgabe der Erfindung ist es, eine Ladeeinrichtung dieser Art zu schaffen, die sich durch einen robusten und einfacheren Aufbau auszeichnet und daher weniger störungsanfällig ist. Das geschieht dadurch, daß die Ladebalken fest auf einer auf der Laderampe in Richtung zum Förderer und von ihm weg hin- und herbewegbaren Förderplatte angeordnet sind, und daß die Stützbalken sich über die Förderplatte hinweg erstrecken und getrennt von dieser abgestützt sind.

Durch diese Bauart ergibt sich, daß sämtliche bewegten Ladebalken durch nur ein Antriebsaggregat bewegt werden können und keine Gelenke vorhanden sind, die durch Verklemmungen von Ladegut beansprucht werden können, da die Förderplatte oder Förderplatten einwandfrei geführt werden können, so daß Kräfte, die von Verklemmungen des Ladegutes herrühren, nicht nachteilig auf den Antrieb wirken können, und daß die Antriebsmittel unter der Förderplatte angeordnet werden können, wo sie vor Berührungen mit dem Fördergut geschützt sind.

Aus der DE-A-33 04 908 ist allerdings bereits eine Ladeeinrichtung bekannt, bei der seitlich des Kopfendes des Förderers Ladebalken mit dreieckigem Querschnitt vorgesehen sind, die quer zu ihrer Längsrichtung geradlinig auf das Kopfende zu und von ihm weg hin- und herbewegt werden. Sie sind aber nur mit einem Ende an einem hin- und herbewegten Schieber befestigt und daher bei Verklemmungen des Ladegutes auch starken Biegebeanspruchungen ausgesetzt. Außerdem sind die Antriebsmittel im Bereich des Ladegutes angeordnet, so daß sie starken Verschmutzungen und Verschleißerscheinungen ausgesetzt sind. Bei der erfindungsgemäßen Ladeeinrichtung werden die Stützbalken vorzugsweise mit ihren die Förderplatte überragenden Enden beiderseits der Förderplatte an der Laderampe befestigt, so daß auch hier keine Betriebsschwierigkeiten entstehen können. Ein weiterer Vorteil dieser Bauart ist, daß die fest mit der Laderampe verbundenen Stützbalken einen Teil des auf der Laderampe befindlichen Ladegutes tragen und so die bewegten Teile entlasten und damit auch deren Antrieb.

Die Förderwirkung kann dadurch erhöht werden, daß die Stützbalken nicht fest mit der Laderampe verbunden, sondern mit einem Antrieb versehen werden, durch die sie ähnlich den Schwenkarmen einer anderen bekannten Ausführung der Anmelderin eine den Ladebalken gegenläufige Hin- und Herbewegung ausführen. Allerdings sind dann die für diese Balken mit Bezug auf die Bauart gemäß der DE-A-33 04 908 angegebenen nachteiligen Wirkungen nicht ganz zu vermeiden.

Unter der Förderplatte ist auf der Laderampe eine Abdeckplatte vorgesehen, die den unterhalb der Förderplatte befindlichen Raum mindestens so weit abdeckt, wie er bei der Hin- und Herbewegung der Förderplatte freigelegt wird. Von dieser Abdeckplatte wird das vor den dem Förderer zunächst angeordneten Ladebalken gelangende Ladegut auf den Förderer abgeschoben. Dabei ist es vorteilhaft, wenn dieser Ladebalken mit seiner steilen Seitenfläche mit der dem Förderer zugewendeten Kante der Förderplatte etwa bündig verläuft. Das Ladegut, das während der Vorbewegung der Förderplatte auf den äußeren Streifen der Abdeckplatte gelangt, wird bei der Rückbewegung der Förderplatte unter Mithilfe einer die Laderampe abschließenden Stützwand auf die Förderplatte und über den dort befindlichen Ladebalken hinweggeschoben.

Die Förderplatte ist auf unter ihr in der Laderampe angeordneten Führungsschienen mittels auf diesen gleitender Schlitten verschiebbar gelagert. Zur Verbindung der Schlitten mit der Förderplatte sind in der Deckplatte entsprechende öffnungen vorgesehen. Durch diese Öffnungen hindurch ist auch das unter der Förderplatte in der Laderampe angeordnete Antriebsmittel mit der Unterseite der Förderplatte verbunden. Die Öffnungen werden vorzugsweise möglichst groß gewählt, damit die Montage der Lagerungs- und Antriebsmittel für die Förderplatten erleichtert wird. Bei den Antriebsmitteln kann es sich um ein hydraulisches Zylinder-Kolben-Aggregat, aber auch um einen Kurbeltrieb handeln, der z.B. durch einen Hydromotor angetrieben wird.

Vorteilhaft ist es auch, wenn die Ladebalken und Stützbalken in Vortriebsrichtung mit von hinten oben nach vorne unten verlaufenden Abschrägungen versehen sind. Das erleichtert die Aufnahme von Ladegut während des Nach-vorne-Bewegens der Vortriebsmaschine.

Ist auf beiden Seiten des Förderers eine Förderplatte vorgesehen, so kann auch auf jeder Seite ein Antriebsmittel vorhanden sein, das unmittelbar mit der jeweiligen Förderplatte verbunden ist. Es ist aber auch möglich, ein solches Antriebsmittel nur auf einer Seite vorzusehen, das über Gestänge, Kettenzüge o. dgl. mit den Unterseiten der beiden Förderplatten verbunden ist. Dabei ergibt sich eine besonders einfache Ausbildung der Gestänge, wenn die beiden Förderplatten gleichsinnig bewegt werden, weil dann nur ein starres Gestänge verwendet werden kann, an das die beiden Förderplatten angeschlossen sind. Die Gestänge oder Kettenzüge können quer unter dem Kopfende des Förderers hindurchgeführt sein.

Die die Förderplatte oder Förderplatten tragenden, als Rahmen ausgebildeten Seitenteile der Laderampe können einteilig, aber auch aus zwei oder mehr in Querrichtung zum Förderer anbaubaren Teilen bestehen und lösbar miteinander verbunden sein. Man kann die Breite der Laderampe auf diese Weise den gegebenen Verhältnissen anpassen, gegebenenfalls auch unsymmetrisch zum Förderer. Die Förderplatten erhalten jeweils angepaßte Längen. Ihre Antriebsmittel befinden sich vorzugsweise stets in dem dem Kopfende des Förderers zunächst angeordneten Rahmenteil.

Die Förderplatte ist gemäß einer weiteren Ausgestaltung der Erfindung mittels einer Konsole auf zwei parallelen Führungsschienen gelagert. Sie besteht aus zwei auf den Führungsschienen angeordneten Gleitelementen und einer diese miteinander verbindenden Platte, die auf ihrer Unterseite Anschlußeinrichtung für die Antriebsmittel und auf ihrer Oberseite Befestigungsstutzen für die Förderplatte aufweist.

Die Führungsschienen sind vorzugsweise als Stangen und die Gleitelemente als die Stangen umschließende Rohre ausgebildet, die an ihren Enden mit Buchsen aus gleitfähigem Material ausgekleidet sind, die ein Abschmieren entbehrlich machen. Die Rohre können an ihren Enden noch Abstreifringe aufweisen, die das Eindringen von Staub zwischen die Führungsstangen und die Gleitbuchsen verhindern.

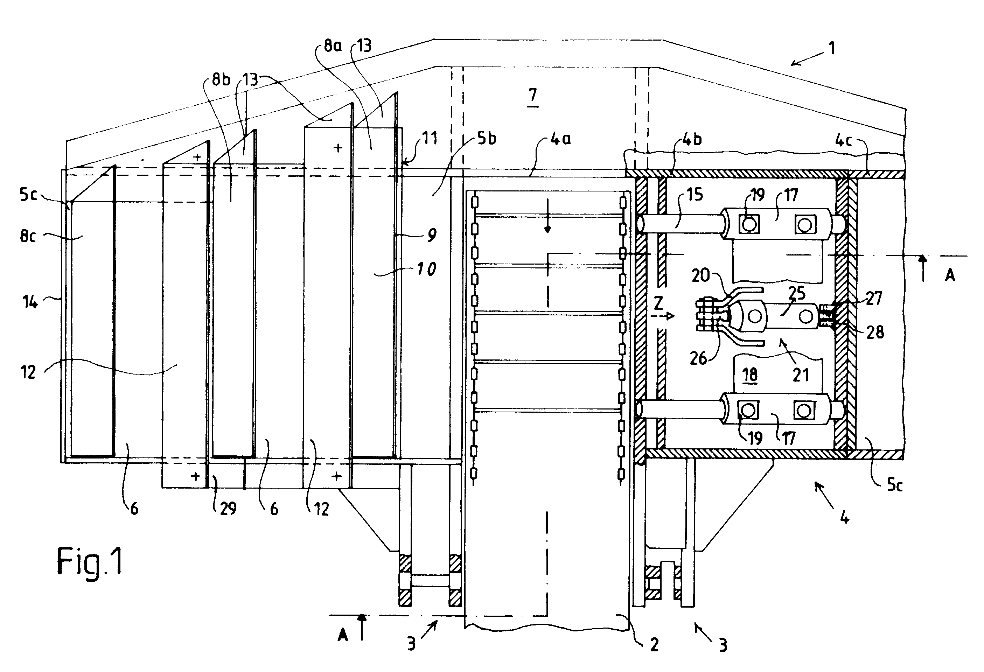

In der Zeichnung ist ein Ausführungsbeispiel gemäß der Erfindung dargestellt, und zwar zeigen
- Fig. 1: eine Draufsicht auf die Ladeeinrichtung mit einem Teilschnitt nach der Linie B-B in Fig. 2 mit einer Ausbrechung,
- Fig. 2: einen lotrechten Teilschnitt durch die Ladeeinrichtung nach der Linie A-A in Fig. 1 mit einer Ausbrechung,
- Fig. 3: einen Detailschnitt durch die Förderplatte und ihrer Lagerung in größerem Maßstab,
- Fig. 4: eine Stirnansicht Z nach Fig. 1 der die Förderplatte tragenden Konsole und
- Fig. 5: einen Schnitt nach der Linie C-C in Fig. 4.

Die Ladeeinrichtung besteht aus einer Laderampe 1 und einem mit seinem Kopfende in die Laderampe eingreifenden Förderer 2. Die Laderampe ist mit Gelenken 3 an einem nicht dargestellten Vortriebsgerät angeordnet und kann um diese Gelenke mehr oder weniger stark abwärtsgeschwenkt werden, so daß sie wie eine Schaufel das auf dem Boden liegende oder von oben herabfallende gewonnene Gestein oder sonstiges Gut aufnehmen kann. Die Laderampe 1 weist einen Rahmen 4 auf, der aus einem mittleren Teil 4a, in dem der Kopfteil des Förderers 2 gelagert ist, und seitlich an diesem befestigten Teilen 4b und 4c besteht.

Die seitlichen Rahmenteile 4b und 4c sind mit Abdeckplatten 5b und 5c versehen. Über den Abdeckplatten ist auf jeder Seite des Förderers 2 eine Förderplatte 6 hin- und herverschiebbar angeordnet, an die sich in Arbeitsrichtung des Vortriebsgerätes nach vorn eine Schürze 7 der Laderampe 1 stufenlos anschließt.

Auf den Förderplatten 6 sind Förderbalken 8 befestigt, die einen dreieckigen Querschnitt haben mit einer steilen Seitenfläche 9 dem Förderer 2 zugewandt und einer flach ansteigenden Seitenfläche 10 auf der Gegenseite. Die steile Seitenfläche 9 des dem Förderer zunächst angeordneten Förderbalkens 6 verläuft etwa bündig mit der Vorderkante 11 der Förderplatte 6. Die in der dargestellten Lage der Förderplatte vor dieser Vorderkante freigelegte Fläche des Rahmens 4 b ist durch die Abdeckplatte 5b geschlossen. In entsprechender Weise ist in der zum Förderer 2 vorgeschobenen Lage der Förderplatte die hinter der Förderplatte freigelegte Fläche des Rahmens 4c durch die Abdeckplatte 5c geschlossen.

Zwischen je zwei Förderbalken 8 erstrecken sich mit geringem Spiel quer über die Förderplatte 6 Stützbalken 12, die einen ähnlichen Querschnitt aufweisen wie die Förderbalken. Sie sind mit ihren die Förderplatte überragenden Enden vorne über die Schürze 7 und hinten über Laschen 29 an dem Rahmen 4 befestigt. Mittels Abschlußbleche 30 sind Durchbrechungen der Rückwand 31 abgeschlossen. Die sich über die Schürze 7 erstreckenden Enden der Förder- und der Stützbalken 8 und 12 sind von oben her mit Abschrägungen 13 versehen, damit sie dem auf die Laderampe 1 gelangenden Fördergut möglichst wenig Widerstand bieten. Die Laderampe 1 ist an ihren Außenseiten mit je einer Stützwand 14 versehen, die mit dem vom Förderer 2 am weitesten entfernten Förderbalken 8c in ähnlicher Weise zusammenarbeitet wie die Stützbalken 12 mit den anderen Förderbalken 8a und 8b.

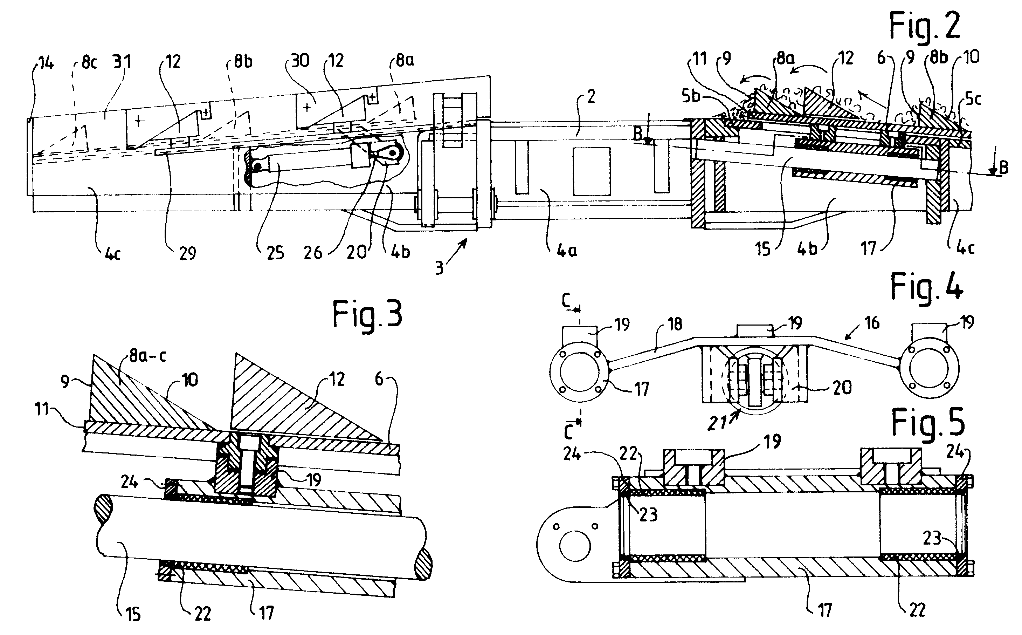

Die Förderplatten 6 sind je auf zwei als Stäbe ausgebildeten Führungsschienen 15 verschiebbar gelagert. Hierzu dient eine unterhalb jeder Förderplatte an dieser befestigten Konsole 16 (siehe Fig. 4), die aus zwei Lagerrohren 17 und einer diese miteinander verbindenden Platte 18 besteht. Auf der Oberseite der Konsole sind Befestigungsstutzen 19 für die Förderplatte 6 und auf der Unterseite Anschlußeinrichtungen 20 für die Antriebsmittel 21 vorgesehen. Wie Fig. 3 zeigt, sind die Befestigungsstutzen 19 als Zapfverbindungen ausgeführt und als solche auch in die Förderplatte und die Lagerrohre eingearbeitet, um die Befestigungsschrauben von Scherkräften freizuhalten.

Die Lagerrohre 17 (siehe Fig. 5) sind innen mit Buchsen 22 aus gleitfähigem Material ausgekleidet. An den Enden der Lagerrohre sind Abstreifringe 23 mittels Ringflanschen 24 befestigt.

Die Antriebsmittel bestehen in dem dargestellten Ausführungsbeispiel aus einem hydraulischen Zylinder-Kolben-Aggregat, dessen Zylinder 25 mit dem Rahmen 4 über Laschen 27, 28 und dessen Kolben über ein Gestänge 26 mit den Anschlußeinrichtungen 20 der Konsole 16 und damit mit der Förderplatte 6 verbunden ist.

Die Wirkungsweise der erfindungsgemäßen Ladeeinrichtung ist die folgende:
Das durch Vorbewegen der Laderampe 1 oder durch Herabfallen von oben auf die Schürze 7 und die Förderplatten 6 gelangende Gut wird durch das Hin- und Herbewegen der Förderplatten schrittweise dem Förderer 2 zugeschoben. Bei der Bewegung der Förderplatten in Richtung zum Förderer schieben die Förderbalken 8 das Gut mit ihrer steilen Seitenfläche 9 über die feststehenden Stützbalken 12 hinweg, bei ihrer entgegengesetzten Bewegung drängen sie sich unter dem Gut hindurch, das durch die steilen Seitenflächen der Stützbalken 12 bzw. der Stützwand 14 gehalten wird und nicht zurückweichen kann. Bei der nächsten Vorbewegung der Förderbalken 6 wird das jeweils vorher über die Förderbalken gelangte Gut wieder über den nächsten davor befindlichen Stützbalken geschoben.

## Patentansprüche

1. Ladeeinrichtung für das Verladen von Haufwerk auf das Kopfende eines Förderers, insbesondere von einer vor dem Kopfende des Förderers vorgesehenen Laderampe einer für den Bergbau bestimmten Vortriebsmaschine, bei der oberhalb der Laderampe seitlich des Kopfendes des Förderers im Querschnitt dreieckige Ladebalken vorgesehen sind, die auf ihrer dem Förderer zugewendeten Seite eine steile und auf ihrer anderen Seite eine flach ansteigende Seitenfläche aufweisen und eine Hin- und Herbewegung in Richtung zum Förderer und von ihm weg ausführen, wobei jedem Ladebalken auf der von dem Förderer abgewendeten Seite am Ende seiner Rückbewegungsbahn ein im Querschnitt ähnlicher Stützbalken bzw. eine Stützwand zugeordnet ist, **dadurch gekennzeichnet,** daß die Ladebalken (8) fest auf einer auf der Laderampe (1) in Richtung zum Förderer (2) und von ihm weg hin- und herbewegbaren Förderplatte (6) angeordnet sind, und daß die Stützbalken (12) sich über die Förderplatte hinweg erstrecken und getrennt von dieser abgestützt sind.

2. Ladeeinrichtung nach Anspruch 1, **dadurch gekennzeichnet,** daß die Stützbalken (12) mit ihren die Förderplatte (6) beiderseits überragenden Enden an der Laderampe (1) befestigt sind.

3. Ladeeinrichtung nach Anspruch 1, **dadurch gekennzeichnet,** daß die Stützbalken (12) eine den Hin- und Herbewegungen der Ladebalken (8) entgegengesetzte Hin- und Herbewegung ausführen.

4. Ladeeinrichtung nach Anspruch 1, **dadurch gekennzeichnet,** daß unterhalb der Förderplatte (6) auf der Laderampe (1) eine Abdeckplatte (5) vorgesehen ist, die den unter der Förderplatte (6) befindlichen Raum zum mindesten so weit abdeckt, wie er bei der Hin- und Herbewegung der Förderplatte freigelegt wird.

5. Ladeeinrichtung nach Anspruch 1, **dadurch gekennzeichnet,** daß der dem Kopfende des Förderers (2) zunächst angeordnete Ladebalken (8a) mit seiner steilen Seitenfläche (9) mit der dem Förderer zugewendeten Kante (11) der Förderplatte (6) etwa bündig ist.

6. Ladeeinrichtung nach Anspruch 1, **dadurch gekennzeichnet,** daß die Förderplatte (6) auf unter ihr in der Laderampe (1) angeordneten Führungsschienen (15) mittels auf diesen gleitender Schlitten (17) verschiebbar angeordnet ist und in der Abdeckplatte (5b) Öffnungen vorgesehen sind, durch die die Förderplatte (6) mit den Schlitten (17) verbindbar ist.

7. Ladeeinrichtung nach Anspruch 1, **dadurch gekennzeichnet,** daß die Förderplatte (6) durch ein unter ihr in der Laderampe (1) angeordnetes Antriebsmittel, z.B. ein hydraulisches Zylinder-Kolben-Aggregat (25, 26), hin- und herbewegbar ist, das durch Öffnungen in der Abdeckplatte (5b) hindurchgreifend mit der Unterseite der Förderplatte verbunden ist.

8. Ladeeinrichtung nach Anspruch 1, **dadurch gekennzeichnet,** daß die Ladebalken (8) und Stützbalken (12) in Vortriebsrichtung mit von hinten oben nach vorne unten verlaufenden Abschrägungen (13) versehen sind.

9. Ladeeinrichtung, bei der beiderseits des Kopfendes des Förderers eine mit Ladebalken versehene Förderplatte gemäß den Ansprüchen 1 bis 4 vorgesehen ist, **dadurch gekennzeichnet,** daß nur auf einer Seite des Förderers (2) in der Laderampe (1) ein Antriebsmittel (21) vorgesehen ist, das über Gestänge, Kettenzüge o. dgl. (26) mit den Unterseiten der beiden Förderplatten (6) verbunden ist.

10. Ladeeinrichtung nach Anspruch 9, **dadurch gekennzeichnet,** daß die beiden Förderplatten (6) gleichsinnig bewegbar sind, so daß, wenn die eine Förderplatte eine Bewegung zum Förderer (2) hin ausführt, die andere eine Rückbewegung vom Förderer weg ausführt.

11. Ladeeinrichtung nach Anspruch 4, **dadurch gekennzeichnet,** daß die Laderampe (1) aus zwei oder mehr quer zum Förderer (2) anbaubaren Teilen (4b, 4c) besteht, die lösbar miteinander verbunden sind, und daß die Antriebsmittel (21) für die Förderplatte (6) in dem dem Kopfende des Förderers zunächst angeordneten Teil (4b) der Laderampe angeordnet sind.

12. Ladeeinrichtung nach Anspruch 6, **dadurch gekennzeichnet,** daß die Förderplatte (6) auf zwei parallelen Führungsschienen (15) mittels einer Konsole (16) gelagert ist, die aus zwei auf den Führungsschienen angeordneten Schlitten (17) und einer diese miteinander verbindenden Platte (18) besteht, die auf ihrer Unterseite Anschlußeinrichtungen (20) für die Antriebsmittel (21) und auf ihrer Oberseite Befestigungsstutzen (19) für die Förderplatte (6) aufweist.

13. Ladeeinrichtung nach Anspruch 9 oder 10, **dadurch gekennzeichnet,** daß die Gestänge oder Kettenzüge (26) unter dem Kopfende des Förderers (2) hindurchgeführt sind.

14. Ladeeinrichtung nach Anspruch 6, **dadurch gekennzeichnet,** daß die Führungsschienen als Stangen (15) und die Schlitten als die Stangen umschließende Lagerrohre (17) ausgebildet sind, die innen mit Buchsen (22) aus gleitfähigen Material ausgekleidet sind.

15. Ladeeinrichtung nach Anspruch 14, **dadurch gekennzeichnet,** daß die Lagerrohre (17) an ihren Enden zusätzlich zu den Gleitbuchsen (22) Abstreifringe (23) aufweisen.

## Claims

1. Loading installation for loading bulk material onto the feed end of a conveyor, in particular from a loading apron located at the feed end of the conveyor and forming part of an advance working machine used in the mining industry, in which above the loading apron at the side of the feed end of the conveyor loading beams are located with a triangular cross-section, the side of which facing the conveyor has a steep lateral face with the opposite side being less acute in its angle, and which perform a reciprocating movement towards and away from the conveyor, whereby for each loading beam a support beam or a support wall with a similar cross-section is installed on the side facing away from the conveyor at the end of the return travel path, characterised in that the loading beams (8) are firmly mounted on a conveyor panel (6) which moves on the loading apron (1) towards the conveyor and away from the same, and in that the support beams (12) protrude beyond the conveyor panel and are supported separately.

2. Loading installation according to claim 1, characterised in that the support beams (12), the ends of which protrude beyond the conveyor panel (6) on both sides, are fastened to the loading apron (1).

3. Loading installation according to claim 1, characterised in that the support beams (12) move to and fro contrary to the reciprocating movement of the loading beams (8).

4. Loading installation according to claim 1, characterised in that beneath the conveyor panel (6) on the loading apron (1) there is a cover plate (5) which covers the space beneath the conveyor panel at least to the same extent as this is exposed by the conveyor panel moving to and fro.

5. Loading installation according to claim 1, characterised in that the steep lateral face (9) of the loading beam (8a) initially disposed towards the end of the conveyor (2) is approximately flush with the edge (11) of the conveyor panel (6) facing the conveyor.

6. Loading installation according to claim 1, characterised in that the conveyor panel (6) can be moved with the aid of a slide (17) running on guide rails (15) located in the loading apron (1) beneath the conveyor panel, and in that holes are provided in the cover plate (5b), by means of which the conveyor panel (6) can be connected up to the slide (17).

7. Loading installation according to claim 1, characterised in that the conveyor panel (6) can be moved to and fro by a means of propulsion, e.g. an hydraulic ram assembly (25, 26), located beneath the conveyor panel (6) in the loading apron (1) and which can be connected to the underside of the conveyor panel through holes in the cover plate (5b).

8. Loading installation according to claim 1, characterised in that the loading beams (8) and support beams (12) are provided with bevels (13) running from rear top to front bottom (13).

9. Loading installation having on both sides of the feed end of the conveyor a conveyor panel equipped with loading beams according to claims 1 to 4, characterised in that a means of propulsion (21), which is connected to the underside of both conveyor panels (6) by means of rods, chains or similar (26), is only located on one side of the conveyor (2) in the loading apron (1).

10. Loading installation according to claim 9, characterised in that both conveyor panels (6) can be moved likewise, such that when one conveyor panel moves towards the conveyor (2), the other conveyor panel moves away from the conveyor.

11. Loading installation according to claim 4, characterised in that the loading apron (1) consists of one or more parts (4b, 4c) which can be attached at right angles to the conveyor (2) and which are interlinked such that they are detachable, and in that the means of propulsion (21) for the conveyor panel (6) are located in that part (4b) of the loading apron initially disposed towards the feed end of the conveyor.

12. Loading installation according to claim 6, characterised in that the conveyor panel (6) rests on two parallel guide rails (15) by means of a bracket (16) consisting of two slides (17) mounted on the guide rails and linked together by a plate (18), which is provided on its underside with connections (20) for the means of propulsion (21) and on its upper side with mountings (19) for the conveyor panel (6).

13. Loading installation according to claim 9 or 10, characterised in that the rods or chains (26) pass beneath the feed end of the conveyor (2).

14. Loading installation according to claim 6, characterised in that the guide rails are designed as rods (15), and the slides are designed as bearing tubes (17) encasing the rods and lined with bushes (22) made from material capable of sliding.

15. Loading installation according to claim 14, characterised in that, besides the slide bushes (22), wiper rings (23) are also provided at the ends of the bearing tubes (17).

## Revendications

1. Dispositif de chargement pour le chargement de minerai abattu sur la tête d'un convoyeur, en particulier depuis une rampe de chargement prévue devant la tête d'un convoyeur d'une abatteuse-chargeuse destinée à l'exploitation minière, dans lequel sont prévus au-dessus de la rampe de chargement et sur le côté de la tête du convoyeur, des barres de chargement de section triangulaire qui présentent sur leur côté orienté vers le convoyeur une face latérale en pente raide et sur leur autre côté une face latérale en pente douce et qui exécutent un mouvement de va-et-vient en direction du convoyeur et en éloignement de celui-ci, une barre de soutien ou paroi de soutien de section semblable étant associée à chaque barre de chargement sur la face opposée au convoyeur à la fin de sa course de retour, caractérisé en ce que les barres de chargement (8) sont agencées fixes sur une plaque de transport (6) qui peut être déplacée en va-et-vient sur la rampe de chargement (1) en direction du convoyeur (2) et en éloignement de celui-ci, et en ce que les barres de soutien (12) s'étendent au-delà de la plaque de transport et sont soutenues séparément de celle-ci.

2. Dispositif de chargement selon la revendication 1, caractérisé en ce que les barres de soutien (12) sont fixées à la rampe de chargement (1) par leurs extrémités dépassant de chaque côté la plaque de transport (6).

3. Dispositif de chargement selon la revendication 1, caractérisé en ce que les barres de soutien (12) exécutent un mouvement de va-et-vient opposé aux mouvements de va-et-vient des barres de chargement (8).

4. Dispositif de chargement selon la revendication 1, caractérisé en ce qu'au-dessous de la plaque de transport (6), il est prévu sur la rampe de chargement (1) une plaque de recouvrement (5) qui recouvre l'espace situé au-dessous de la plaque de transport (6) au moins dans la mesure dans laquelle cet espace est découvert lors du mouvement de va-et-vient de la plaque de transport.

5. Dispositif de chargement selon la revendication 1, caractérisé en ce que la barre de chargement (8a) située le plus près de la tête du convoyeur (2) affleure approximativement par sa face latérale en pente raide (9) avec l'arête (11) de la plaque de transport (6), qui est orientée vers le convoyeur.

6. Dispositif de chargement selon la revendication 1, caractérisé en ce que la plaque de transport (6) est agencée à déplacement sur des rails de guidage (15) agencés au-dessous d'elle dans la rampe de chargement (1) au moyen de chariots (17) glissant sur ces rails, et en ce que dans la plaque de recouvrement (5b) sont prévues des ouvertures à travers lesquelles la plaque de transport (6) peut être raccordée avec les chariots (17).

7. Dispositif de chargement selon la revendication 1, caractérisé en ce que la plaque de transport (6) peut être déplacée en va-et-vient par un dispositif d'entraînement agencé au-dessous d'elle dans la rampe de chargement (1), p.ex. un ensemble hydraulique à piston-et-cylindre (25, 26) qui est relié avec la face inférieure de la plaque de transport en traversant les ouvertures de la plaque de recouvrement (5b).

8. Dispositif de chargement selon la revendication 1, caractérisé en ce que les barres de chargement (8) et les barres de soutien (12) sont pourvues, dans le sens d'avancement, de biseaux (13) s'étendant de l'arrière vers l'avant et du haut vers le bas.

9. Dispositif de chargement dans lequel il est prévu de chaque côté de la tête du convoyeur une plaque de transport équipée de barres de chargement selon les revendications 1 à 4, caractérisé en ce qu'il n'est prévu que sur un côté du convoyeur (2) dans la rampe de chargement (1) un moyen d'entraînement (21) qui est relié aux faces inférieures des deux plaques de transport (6) par des systèmes à tiges, chaînes ou similaires (26).

10. Dispositif de chargement selon la revendication 9, caractérisé en ce que les deux plaques de transport (6) peuvent être déplacées dans le même sens de sorte que lorsque l'une des plaques de transport fait un mouvement en direction du convoyeur (2), l'autre fait un mouvement de retour pour s'éloigner du convoyeur.

11. Dispositif de chargement selon la revendication 4, caractérisé en ce que la rampe de chargement (1) est constituée de deux ou plusieurs éléments (4b, 4c) qui peuvent être montés transversalement au convoyeur (2) et sont reliés les uns aux autres de façon amovible, et en ce que les organes d'entraînement (21) pour la plaque de transport (6) sont agencés dans la partie (4b) de la rampe de chargement qui se trouve le plus près de la tête du convoyeur.

12. Dispositif de chargement selon la revendication 6, caractérisé en ce que la plaque de transport (6) est montée sur deux rails de guidage (15) parallèles au moyen d'une console (16) qui est constituée de deux chariots (17) agencés sur les rails de guidage et d'une plaque (18) reliant ces chariots, plaque qui présente sur sa face inférieure des dispositifs de raccordement (20) pour les organes d'entraînement (21) et sur sa face supérieure des manchons de fixation (19) pour la plaque de transport (6).

13. Dispositif de chargement selon la revendication 9 ou 10, caractérisé en ce que les systèmes à tiges ou à chaînes (26) passent au-dessous de la tête du convoyeur (2).

14. Dispositif de chargement selon la revendication 6, caractérisé en ce que les rails de guidage sont réalisés comme des tiges (15) et les chariots comme des tubes de montage (17) entourant les tiges, ceux-ci étant revêtus à l'intérieur par des douilles (22) en matériau glissant.

15. Dispositif de chargement selon la revendication 14, caractérisé en ce que les tubes de montage (17) présentent à leurs extrémités des bagues de raclage en plus des douilles de glissement (22).
